# EUROPÄISCHE PATENTANMELDUNG

(11) **EP 2 193 847 A1**
(43) Veröffentlichungstag der Anmeldung: **09.06.2010**
(21) Anmeldenummer: 08170677.2
(22) Anmeldetag: 04.12.2008
(51) Int. Cl.: B01L 3/02, G01N 35/10

(54) **Koaxialnadel und Pipettiervorrichtung**

(71) Anmelder: EMBL (European Molecular Biology Laboratory), 69117 Heidelberg (DE)
(72) Erfinder: Winkler, Siegfried, 69124, Heidelberg (DE); Conrad, Christian, 68535, Edingen (DE)
(74) Vertreter: Liesegang, Eva

(57) **Zusammenfassung**

Eine zweiteilige Koaxialnadel (10,14,16) für eine Pipettiervorrichtung. insbesondere zur Verwendung in der Mikroskople von Zellproben, ermöglicht sowohl das Injizieren einer Flüssigkeit in einen Pipettierbehälter (12) als auch das Absaugen einer Flüssigkeit aus dem Pipettierbehälter. In einer bevorzugten Ausführung erfolgen sowohl der Antrieb zum Absenken der Koaxialnadel (10) in den Pipettibehälter (12) als auch Injektion und Absaugen der Flüssigkeit pneumatisch über nur eine Druckquelle. Der erfindungsgemäße Aufbau der Koaxialnadel (10) und der Antriebssysteme (84,86) ermöglicht eine schnelle, zuverlässige Pipettierung bei hoher Dosiergenauigkeit und eine besonders kompakte Pipettiereinheit (126), die ohne wechselseitige Störung zusammen mit einer Vielzahl weitverhreiteter Mikroskoptypen einsetzbar ist.

## Beschreibung

### Technisches Gebiet

Die vorliegende Erfindung betrifft eine Pipettiervorrichtung zur Verwendung in der Mikroskopie, insbesondere in der Mikroskopie von Zellproben.

### Hintergrund und Stand der Technik

Versuchsreihen mit lebenden Zellen haben in der biologischen und medizinischen Forschung und Entwicklung eine überragende Bedeutung und werden von der pharmazeutischen Industrie in großem Umfang, beispielsweise bei der Entwicklung neuer Wirkstoffe und Medikamente, eingesetzt. Dabei besteht das Bedürfnis, eine Vielzahl unterschiedlicher Zellproben schnell und weitestgehend automatisiert mittels Transmissions- oder Fluoreszenzmikroskopie zu beobachten und den einzelnen Proben während der Beobachtung oder zwischen aufeinander folgenden Beobachtungsschritten kontrolliert flüssige Substanzen, die beispielsweise einen medizinischen Wirkstoff oder eine molekularbiologische Modifikation (z.B. siRNA oder Immunfärbung) enthalten können, zuzuführen.

Zu diesem Zweck werden Zellproben auf getrennte Kammern eines Objektträgers oder einer Multiwell-Platte verteilt und zur Beobachtung nacheinander auf einem Objektivtisch in den Strahlengang eines Mikroskops eingebracht. Häufig kommen dabei inverse Mikroskope zum Einsatz, bei denen die Bildaufnahmevorrichtung und oft auch zumindest ein Teil der Beleuchtungsvorrichtung unterhalb des Objektivtisches angeordnet sind, so dass der Raum oberhalb des Objektivtisches vornehmlich dem Positionieren und Befüllen der Probe vorbehalten bleiben kann. Zur schnellen und automatischen Positionierung der Proben sind auf dem Objekttisch im Allgemeinen Probenpositionierer vorgesehen, die eine Vielzahl verschiedener Probenbehälter aufnehmen können und deren einzelne Probenkammern schnell und mit großer Genauigkeit in den Strahlengang des Mikroskops verfahren und zur Einstellung des Fokus auch entlang der optischen Achse verschoben werden können. Das Zusetzen einer Flüssigkeit, beispielsweise eines Wirkstoffes in festgelegtem Verdünnungs- oder Mischungsverhältnis, in die einzelnen Probenkammern bzw. das Absaugen der Flüssigkeit aus den Probenkammer erfolgt teilweise noch von Hand, beispielsweise unter Verwendung einer Mikroliterpipette. Ein manuelles Befüllen bzw. Absaugen ist jedoch nicht nur zeit- und arbeitsaufwendig, sondern auch recht fehleranfällig.

Zudem müssen Versuchsreihen oft unter kontrollierten Temperatur- und Atmosphärenbedingungen ausgeführt werden, so dass der Probenbehälter mitsamt des Objektivtisches und Teilen der Beobachtungs- und Beleuchtungseinrichtung in einer sogenannten Klimakammer aufgenommen wird und die Proben daher von außen kaum mehr zugänglich sind. Es wurden daher automatisierte Pipettiersysteme mit verfahrbarer Pipette entwickelt, die eine schnelle und zuverlässige Zufuhr einer Flüssigkeit in ausgewählte Pipettierbehälter unter kontrollierter Atmosphäre ermöglichen. Die Flüssigkeitszufuhr aus einem Vorratsbehälter erfolgt dabei standardmäßig unter Verwendung von mit Mikromotoren betriebenen Pumpen; die Positionierung und der Betrieb der Pipette erfolgt gleichfalls unter Verwendung von Elektromotoren. Ein inverses Mikroskop mit einer solchen automatisierten Pipettiervorrichtung innerhalb einer Klimakammer ist beispielhaft in der Patentschrift US 7 092 151 B2 beschrieben.

Die aus dem Stand der Technik vorbekannten Pipettiervorrichtungen haben die Schwierigkeit, dass die Pipette und die Antriebseinheit verhältnismäßig viel Bauraum erfordern und daher den Betrieb des Mikroskops beeinträchtigen können. Dieses Problem tritt insbesondere dann auf, wenn die Proben in Transmission von oberhalb des Objekttisches beleuchtet werden sollen, da sich die Beleuchtungseinrichtung und die Pipettiervorrichtung gegenseitig stören. Dieselben Schwierigkeiten können sich aber auch bei Versuchsreihen ergeben, in denen die Beleuchtung ausschließlich von unterhalb des Objekttisches erfolgen kann, das verwendete Mikroskop aber standardmäßig eine zweite Beleuchtungseinrichtung oberhalb des Objekttisches vorsieht, die zwar für die durchzuführende Versuchsreihe nicht benötigt wird, sich aber gleichwohl konstruktionsbedingt nicht so weit aus dem Strahlengang entfernen lässt, dass ein unbeeinträchtigter Betrieb der automatischen Pipettiervorrichtung möglich wird. Viele weit verbreitete Mikroskoptypen weisen eine solche räumliche Beschränkung auf und können deshalb mit den aus dem Stand der Technik vorbekannten automatischen Pipettiervorrichtungen nur mit funktionellen Einschränkungen oder nur nach möglicherweise zeit- und kostenintensiven Modifikationen verwendet werden. Es besteht daher Bedarf nach einer Pipettiervorrichtung, die sich ohne gegenseitige Beeinträchtigung mit Mikroskopen bekannter und verbreiteter Bauart einsetzen lässt.

Zudem sind die verwendeten Probenkammern häufig zum Schutz der Proben vor der Umgebungsatmosphäre mit einer Abdeckung, beispielsweise einer Metall- oder Kunststofffolie, versiegelt. Es besteht daher ferner Bedarf nach einer automatischen Pipettiervorrichtung, die trotz einer solchen Versiegelung ein schnelles, zuverlässiges und präzises Zuführen einer Flüssigkeit in ausgewählte Probenkammern ermöglicht.

Gleichfalls sollte die Pipettiervorrichtung neben dem automatisierten Zuführen einer Flüssigkeit in ausgewählte Probenkammern auch ein schnelles und wirkungsvolles Entfernen einer Flüssigkeit aus ausgewählten Probenkammern erlauben.

Diese Aufgaben werden durch die erfindungsgemäße Koaxialnadel nach Anspruch 1 bzw. die erfindungsgemäße Pipettiervorrichtung nach Anspruch 11 und Anspruch 30 gelöst. Die Erfindung umfasst auch das entsprechende Pipettierverfahren nach Anspruch 37. Die Unteransprüche betreffen bevorzugte Ausführungsformen.

### Überblick über die Erfindung

Die erfindungsgemäße Koaxialnadel für eine Pipettiervorrichtung umfasst eine hohle Sauglanze zum Ansaugen einer Flüssigkeit aus einem Pipettierbehälter sowie eine hohle Einführlanze, welche die Sauglanze zumindest teilweise umschließt, so dass zwischen einer Außenwand der Sauglanze und einer Innenwand der Einführlanze ein Flüssigkeitskanal zum Einbringen einer Flüssigkeit in einen Pipettierbehälter ausgebildet ist.

Der Flüssigkeitskanal kann insbesondere den gesamten zwischen der Außenwand der Sauglanze und der Innenwand der Einführlanze ausgebildeten Hohlraum umfassen.

Die erfindungsgemäße Koaxialnadel erlaubt ein sorgfältiges und exaktes Dosieren der einzubringenden Flüssigkeitsmenge sowohl bei einer Tröpfcheninjektion als auch bei einer Injektion im kontinuierlichen Fluss.

In einer bevorzugten Ausführungsform umschließt die Einführlanze die Sauglanze koaxial. Dadurch wird eine besonders gleichmäßige Flüssigkeitszufuhr ermöglicht.

In einer weiteren bevorzugten Ausführungsform sind die Sauglanze und/oder die Einführlanze in Form eines Hohlzylinders oder eines Hohlkegelstumpfes ausgebildet.

Ferner weist die Sauglanze in einer bevorzugten Ausführungsform ein erstes offenes Ende zur Aufnahme einer Flüssigkeit aus einem Pipettierbehälter und ein dem ersten offenen Ende axial gegenüberliegendes zweites offenes Ende zur Abgabe der aufgenommenen Flüssigkeit an einen Absaugstutzen auf.

Ferner hat die Einführlanze vorzugsweise ein erstes offenes Ende zur Abgabe einer Flüssigkeit an einen Pipettierbehälter und ein dem ersten offenen Ende axial gegenüberliegendes zweites offenes Ende zur Aufnahme einer Flüssigkeit aus einem Einführstutzen.

Die einzubringende Flüssigkeit kann dem Flüssigkeitskanal aus dem Einführstutzen über das zweite offene Ende der Einführlanze zugeführt und durch das dem zweiten offenen Ende axial gegenüberliegende erste offene Ende der Einführlanze in den Pipettierbehälter eingebracht werden. Ebenso kann eine Flüssigkeit aus dem Pipettierbehälter durch das erste offene Ende der Sauglanze in das Innere der Sauglanze abgesaugt und von dort über das dem ersten offenen Ende axial gegenüberliegende zweite offene Ende an den Absaugstutzen abgegeben werden. Mit der erfindungsgemäßen Koaxialnadel lassen sich Flüssigkeiten schnell und dosiert in den Pipettierbehälter injizieren und auch aus dem Pipettierbehälter entfernen.

In einer bevorzugten Ausführungsform weist die Einführlanze an ihrem ersten offenen Ende eine Einführspitze auf. Insbesondere kann das erste offene Ende der Einführlanze schräg zugespitzt sein. Auf diese Weise lassen sich Flüssigkeiten auch mit einer Abdeckung versiegelten Pipettierbehältem zuführen oder aus solchen Pipettierbehältern entfernen.

In einer weiteren bevorzugten Ausführungsform ist das erste offene Ende der Sauglanze im Inneren der Einführlanze angeordnet. Dadurch ergibt sich einerseits der Vorteil, dass die Sauglanze beim Einstechen in versiegelte Pipettierbehälter wirkungsvoll vor Beschädigungen geschützt wird. Andererseits wirkt die Anordnung der Sauglanze im Inneren der Einführlanze vorteilhaft auf die Flüssigkeitsdosierung. Die in den Flüssigkeitskanal eintretende Flüssigkeit umfließt und benetzt die Sauglanze und kann sich vor dem Einbringen in den Pipettierbehälter am offenen Ende der Sauglanze zu einem Flüssigkeitstropfen definierter Größe sammeln.

In einer bevorzugten Ausführungsform weist die Einführlanze an ihrem zweiten Ende einen Einführtrichter auf. Dadurch wird eine vereinfachte Zufuhr der Flüssigkeit aus dem Einführstutzen in den Flüssigkeitskanal sichergestellt.

In einer weiteren bevorzugten Ausführungsform sind die Sauglanze und die Einführlanze entlang einer gemeinsamen Axialrichtung verfahrbar. Auf diese Weise lassen sich die Lanzen zum Zuführen oder Absaugen einer Flüssigkeit in den Pipettierbehälter absenken.

Die Sauglanze und die Einführlanze können entlang der Axialrichtung insbesondere unabhängig voneinander verfahrbar sein. Dadurch wird beispielsweise ermöglicht, dass die Sauglanze aus der Einführlanze herausgefahren und zum Ansaugen einer Flüssigkeit bis zum Boden des Pipettierbehälters abgesenkt werden kann.

In einer erfindungsgemäßen Pipettiervorrichtung ist das zweite offene Ende der Einführlanze vorzugsweise über eine erste Verbindungsleitung mit einem ersten Vorratsbehälter verbunden und ferner das zweite offene Ende der Sauglanze über eine zweite Verbindungsleitung mit einem zweiten Vorratsbehälter verbunden.

Aus dem ersten Vorratsbehälter kann auf diese Weise über die erste Verbindungsleitung die in den Pipettierbehälter einzubringende Flüssigkeit entnommen werden, wohingegen die aus dem Pipettierbehälter abgesaugte Flüssigkeit über die zweite Verbindungsleitung an den zweiten Vorratsbehälter abgeführt wird.

Die erste Verbindungsleitung kann ein Zuführventil umfassen, das zwischen der Einführlanze und dem ersten Vorratsbehälter angeordnet und dem zweiten offenen Ende der Einführlanze eng benachbart ist, wobei der Abstand zwischen dem Zuführventil und dem zweiten offenen Ende vorzugsweise kleiner als der zehnfache Innendurchmesser der ersten Verbindungsleitung ist oder nicht mehr als 2 cm beträgt. Durch ein dem zweiten offenen Ende der Einführlanze und damit dem Flüssigkeitskanal eng benachbartes Zuführventil lassen sich Injektionszeitpunkt und -dosis mit hoher Genauigkeit festlegen.

In einer bevorzugten Ausführungsform umfasst die zweite Verbindungsleitung ein Absaugventil zwischen dem zweiten offenen Ende der Sauglanze und dem zweiten Vorratsbehälter.

Bei dem Zuführventil und/oder dem Absaugventil handelt es sich vorzugsweise um elektronisch ansteuerbare 3/2-Ventile.

In einer weiteren bevorzugten Ausführungsform ist der erste Vorratsbehälter über eine erste Druckleitung mit einer ersten Druckquelle verbunden. Dies gestattet die Zufuhr einer Flüssigkeit über die erste Verbindungsleitung in den Flüssigkeitskanal, indem der erste Vorratsbehälter mittels der ersten Druckquelle über die erste Druckleitung unter Überdruck gesetzt wird, wobei die Dosierung unter Verwendung des Zuführventils gesteuert wird. Auf diese Weise lässt sich eine genau dosierte Flüssigkeitsmenge durch einen Druckstoß aus dem Flüssigkeitskanal in den Pipettierbehälter injizieren.

In einer bevorzugten Ausführungsform ist die Druckquelle eine Stickstoffdruckquelle.

In einer vorteilhaften Ausführungsform umfasst die erste Druckleitung einen Druckminderer und/oder einen Filter zwischen dem ersten Vorratsbehälter und der ersten Druckquelle. Der Druckminderer erlaubt eine Einstellung des Arbeitsdruckbereichs, während der Filter den Vorratsbehälter und die darin gelagerte Flüssigkeit vor Kontamination schützt.

In einer bevorzugten Ausführungsform ist der zweite Vorratsbehälter über eine zweite Druckleitung mit einer Unterdruckquelle verbunden. Dadurch lässt sich der zweite Vorratsbehälter und die mit ihm verbundene zweite Verbindungsleitung unter Unterdruck setzen, so dass durch Ansteuern des Abführventils eine Flüssigkeit aus dem Pipettierbehälter durch die Sauglanze hindurch in die zweite Verbindungsleitung und von dort in den zweiten Vorratsbehälter angesaugt werden kann.

In einer weiteren bevorzugten Ausführungsform umfasst die Unterdruckquelle eine Vakuumpumpe. In einer alternativen Ausführungsform umfasst die Unterdruckquelle eine mit der ersten Druckquelle verbundene Venturi-Düse, die einen Überdruck der ersten Druckquelle in einen Unterdruck umwandelt. In dieser Ausführungsform lassen sich unter Verwendung einer einzigen Druckquelle Flüssigkeiten sowohl in den Pipettierbehälter injizieren als auch aus dem Pipettierbehälter absaugen.

In einer vorteilhaften Ausführungsform ist die Einführlanze mit einer ersten Antriebseinheit und die Sauglanze mit einer zweiten Antriebseinheit verbunden. Die erste und/oder die zweite Antriebseinheit sind vorzugsweise pneumatische Antriebseinheiten.

Indem der Antrieb der Einführlanze und der Sauglanze pneumatisch erfolgt, lässt sich der von der Antriebseinheit beanspruchte Bauraum deutlich reduzieren. Daher kann die Koaxialnadel mit den beiden Antriebseinheiten vorteilhaft zu einer verfahrbaren Pipettiereinheit zusammengefasst werden, deren Bauhöhe entlang einer Axialrichtung der Koaxialnadel 4 cm nicht überschreitet. Die geringe Bauhöhe in Axialrichtung ermöglicht insbesondere das Verfahren einer solchen Pipettiereinheit in den zwischen einen Objekttisch bzw. Pipettierbehälter und einer Beleuchtungseinrichtung eines Mikroskops ausgebildeten Zwischenraum, ohne dass der Betrieb des Mikroskops beeinträchtigt oder eine bauliche Modifikation des Mikroskops nötig wird.

In einer bevorzugten Ausführungsform umfasst die erste Antriebseinheit einen ersten Druckkolben sowie ein erstes Verbindungselement und ein erstes Befestigungselement oder -mittel, wobei das erste Befestigungselement mit der Einführlanze und über das erste Verbindungselement mit dem ersten Druckkolben verbindbar ist. Die zweite Antriebseinheit umfasst einen zweiten Druckkolben sowie ein zweites Verbindungselement und ein zweites Befestigungselement, wobei das zweite Befestigungselement oder - mittel mit der Sauglanze verbunden und über das zweite Verbindungselement mit dem zweiten Druckkolben verbindbar ist.

In einer bevorzugten Ausführungsform umfasst das erste Befestigungselement zudem den Einführstutzen zum Aufnehmen einer Flüssigkeit aus dem ersten Vorratsbehälter, und das zweite Befestigungselement umfasst den Absaugstutzen zum Abgeben der aufgenommenen Flüssigkeit über die zweite Verbindungsleitung an den zweiten Vorratsbehälter. Auf diese Weise lässt sich der von der Pipettiereinheit beanspruchte Bauraum weiter reduzieren.

In einer weiteren bevorzugten Ausführungsform ist das erste Befestigungselement mit dem zweiten Befestigungselement über eine Feder verbunden und über einen Mitnehmerbolzen verbindbar. Auf diese Weise lassen sich die Einführlanze und die Sauglanze gemeinsam unter Verwendung nur einer einzigen Antriebseinheit in den Pipettierbehälter absenken, wie unten anhand eines Ausführungsbeispiels erläutert wird.

In einer vorteilhaften Ausführungsform sind die erste Antriebseinheit über eine dritte Druckleitung und die zweite Antriebseinheit über eine vierte Druckleitung mit einer zweiten Druckquelle verbunden. Die zweite Druckquelle ist in einer bevorzugten Ausführungsform mit der ersten Druckquelle identisch. Dann lassen sich sowohl die Lanzen der Koaxialnadel als auch die Flüssigkeiten mit einer einzigen Druckquelle antreiben. Auf diese Weise entsteht eine besonders kompakte und effiziente Pipettiervorrichtung.

In einer bevorzugten Ausführungsform umfasst die dritte Druckleitung ein erstes Schnellentlüftungs-Drosselventil sowie ein erstes Antriebsventil, wobei das erste Schnellentlüftungs-Drosselventil zwischen dem ersten Druckkolben und dem ersten Antriebsventil angeordnet ist.

Das Schnellentlüftungs-Drosselventil führt zu einem verlangsamten Druckaufbau an der ersten Antriebseinheit und erlaubt damit die Reduzierung der Verfahrgeschwindigkeit beim Absenken der Einführlanze entlang ihrer Axialrichtung.

Entsprechend kann die vierte Druckleitung ein zweites Schnellentlüftungs-Drosselventil sowie ein zweites Antriebsventil umfassen, wobei das zweite Schnellentlüftungs-Drosselventil zwischen dem zweiten Druckkolben und dem zweiten Antriebsventil angeordnet ist.

In einer bevorzugten Ausführungsform sind das erste Antriebsventil und das zweite Antriebsventil elektronisch ansteuerbare 3/2-Ventile.

In einer bevorzugten Ausführungsform umfasst die erfindungsgemäße Pipettiervorrichtung eine in einer Richtung senkrecht zu einer Axialrichtung der Koaxialnadel verfahrbare Pipettiereinheit, welche die Koaxialnadel zusammen mit der ersten Antriebseinheit und der zweiten Antriebseinheit umfasst, wobei eine Bauhöhe der Pipettiereinheit entlang einer Axialrichtung 4cm nicht überschreitet.

Die Erfindung bezieht sich auch auf eine Pipettiervorrichtung mit einer Pipette zum Einbringen einer Flüssigkeit in einen Pipettierbehälter und einer Antriebseinheit zum Verfahren der Pipette, wobei die Antriebseinheit eine pneumatische Antriebseinheit ist und über eine dritte Druckleitung mit einer ersten Druckquelle verbunden ist.

Wie obenstehend ausgeführt, erlaubt der pneumatische Antrieb eine besonders kompakte Pipettiervorrichtung, insbesondere eine die Pipette und die Antriebseinheit umfassende Pipettiereinheit mit besonders geringer Bauhöhe entlang einer Axialrichtung der Pipette.

Die Pipettiervorrichtung umfasst in einer vorteilhaften Ausgestaltung zusätzlich eine erste Verbindungsleitung, welche die Pipette mit einem ersten Vorratsbehälter verbindet, wobei der erste Vorratsbehälter über eine erste Druckleitung mit der ersten Druckquelle verbunden ist. Auf diese Weise lassen sich über eine gemeinsame Druckquelle sowohl die Antriebseinheit zum Verfahren der Pipette als auch die Injektionsvorrichtung zum Einbringen der Flüssigkeit betreiben, so dass sich wiederum eine besonders kompakte und effiziente Pipettiervorrichtung ergibt.

Die Pipette der erfindungsgemäßen Pipettiervorrichtung kann ferner zum Ansaugen einer Flüssigkeit aus einem Pipettierbehälter ausgebildet sein und über eine zweite Verbindungsleitung mit einem zweiten Vorratsbehälter verbunden sein, wobei der zweite Vorratsbehälter über eine zweite Druckleitung mit einer Unterdruckquelle verbunden ist.

Die Unterdruckquelle kann wiederum eine mit der ersten Druckquelle verbundene Venturi-Düse umfassen, wodurch sich die obenstehend beschriebenen Vorteile ergeben.

Die Erfindung bezieht sich auch auf ein Mikroskop mit einer Pipettiervorrichtung mit den vorstehend beschriebenen Merkmalen. Insbesondere kann das Mikroskop ein inverses Mikroskop sein.

Schließlich bezieht sich die Erfindung auf ein Verfahren zur Pipettierung, bei dem eine Koaxialnadel mit einer hohlen Sauglanze und einer hohlen Einführlanze, welche die Sauglanze zumindest teilweise umschließt, oberhalb eines Pipettierbehälters positioniert wird, die Sauglanze und die Einführlanze gemeinsam in den Pipettierbehälter verfahren werden, eine Flüssigkeit aus einem ersten Flüssigkeitsreservoir in einen zwischen einer Außenwand der Sauglanze und einer Innenwand der Einführlanze ausgebildeten Flüssigkeitskanal eingebracht wird und die Flüssigkeit aus dem Flüssigkeitskanal in den Pipettierbehälter eingebracht wird.

In einer bevorzugten Ausführungsform ist oder wird ein erstes Ende der Sauglanze im Innern der Einführlanze positioniert, so dass der Abstand eines dem Pipettierbehälter zugewandten ersten offenen Ende der Sauglanze von einem dem Pipettierbehälter zugewandten ersten offenen Ende der Einführlanze während des Einbringens der Flüssigkeit in den Pipettierbehälter mindestens 1 mm beträgt. Wie obenstehend ausgeführt, wird auf diese Weise die Tröpfchenbildung im Flüssigkeitskanal gefördert und eine spritzfreie Injektion ermöglicht.

In einer weiteren bevorzugten Ausführungsform wird die Flüssigkeit tröpfchenweise in den Pipettierbehälter eingebracht, wobei das Volumen der Tröpfchen durch Wahl eines Abstandes eines dem Pipettierbehälter zugewandten ersten offenen Endes der Sauglanze von einem dem Pipettierbehälter zugewandten ersten offenen Ende der Einführlanze eingestellt wird. Während des Einbringens der Flüssigkeit in den Pipettierbehälter beträgt der Abstand vorzugsweise mindestens 1 mm.

Der Schritt des Verfahrens der Sauglanze und der Einführlanze umfasst in einer bevorzugten Ausführungsform das Durchstoßen einer Abdeckung des Pipettierbehälters.

In einer weiteren bevorzugten Ausführungsform wird die Flüssigkeit mittels eines Druckstoßes in den Pipettierbehälter injiziert. Wie obenstehend ausgeführt, lässt sich die injizierte Flüssigkeitsmenge auf diese Weise wirkungsvoll dosieren und der Injektionszeitpunkt präzise festlegen.

Ferner umfasst das erfindungsgemäße Verfahren in einer bevorzugten Ausführungsform zusätzlich den Schritt des Verbindens eines zweiten offenen Endes der Sauglanze mit einer ersten Unterdruckquelle sowie das Absaugen eines Flüssigkeitsüberschusses aus dem Flüssigkeitskanal durch das Innere der Sauglanze in ein zweites Flüssigkeitsreservoir.

Indem überschüssige Flüssigkeit aus dem Flüssigkeitskanal abgesaugt wird, wird die Gefahr eines unbeabsichtigten Einbringens übermäßig großer Flüssigkeitsmengen in den Pipettierbehälter vermindert. Zudem lässt sich unter Verwendung des erfindungsgemäßen Verfahrens der Flüssigkeitskanal durch ein Absaugen auf einfache Weise reinigen. Dies ist insbesondere dann vorteilhaft, wenn während einer Versuchsreihe oder zwischen aufeinanderfolgenden Versuchsreihen die einzubringende Flüssigkeit gewechselt werden soll und eine Kontamination einer nachfolgend verwendeten Flüssigkeit mit Resten der vorhergehend verwendeten Flüssigkeit vermieden werden muss.

In einer weiteren bevorzugten Ausführungsform umfasst das erfindungsgemäße Verfahren zusätzlich den Schritt eines Verfahrens der Sauglanze entlang einer gemeinsamen Axialrichtung der Sauglanze und der Einführlanze, bis ein erstes offene Ende der Sauglanze in ein Flüssigkeitsvolumen innerhalb des Pipettierbehälters eintaucht, sowie ferner das Verbinden eines zweiten offenen Endes der Sauglanze mit einer zweiten Unterdruckquelle und das Absaugen einer Flüssigkeit aus dem Pipettierbehälter durch das Innere der Sauglanze in ein drittes Flüssigkeitsreservoir.

Indem sich die Sauglanze unabhängig von der Einführlanze entlang einer gemeinsamen Axialrichtung absenken lässt, kann eine Flüssigkeit aus dem Inneren des Pipettierbehälters auch bei niedrigem Flüssigkeitspegel wirkungsvoll und vollständig abgesaugt werden.

In einer bevorzugten Ausführung stimmt die zweite Unterdruckquelle mit der ersten Unterdruckquelle überein und/oder stimmt ferner das dritte Flüssigkeitsreservoir mit dem zweiten Flüssigkeitsreservoir überein.

### Ausführliche Beschreibung einer bevorzugten Ausführungsform

Die erfindungsgemäße Koaxialnadel bzw. die erfindungsgemäße Pipettiervorrichtung lassen sich aufgrund des kompakten Aufbaus und der geringen Bauhöhe ohne gegenseitige Beeinflussung zusammen mit vielen weit verbreiteten Mikroskoptypen verwenden und erlauben zudem die schnelle und kontrollierte automatisierte Injektion von Flüssigkeiten in einen Pipettierbehälter sowie das Absaugen von Flüssigkeiten aus einem Pipettierbehälter.

Die zahlreichen Vorteile der erfindungsgemäßen Koaxialnadel sowie der erfindungsgemäßen Pipettiervorrichtung und des erfindungsgemäßen Pipettierverfahrens lassen sich am Besten anhand der detaillierten Beschreibung der angefügten Zeichnungen verstehen, in denen:
- Fig. 1a: eine schematische Übersichtszeichnung einer bevorzugten Ausführungsform der erfindungsgemäßen Pipettiervorrichtung darstellt;
- Fig. 1b: eine vergrößerte Ansicht der in der Pipettiervorrichtung der Fig. 1a eingesetzten Schnellentlüftungs-Drosselventile zeigt;
- Fig. 2a - 2d: eine bevorzugte Ausführungsform einer erfindungsgemäße Koaxialnadel in unterschiedlichen Betriebspositionen zeigen;
- Fig. 3a - 3c: schematisch die Antriebsvorrichtung zum Betrieb der erfindungsgemäßen Koaxialnadel in verschiedenen Betriebspositionen in einer Seitenansicht zeigen;
- Fig. 4a - 4c: die Antriebsvorrichtung in den verschiedenen Betriebspositionen der Fig. 3a - 3c schematisch in einer Vorderansicht zeigen; und
- Fig. 5: eine Weiterbildung der erfindungsgemäßen Pipettiervorrichtung mit mehreren Flüssigkeitsreservoirs zeigt.

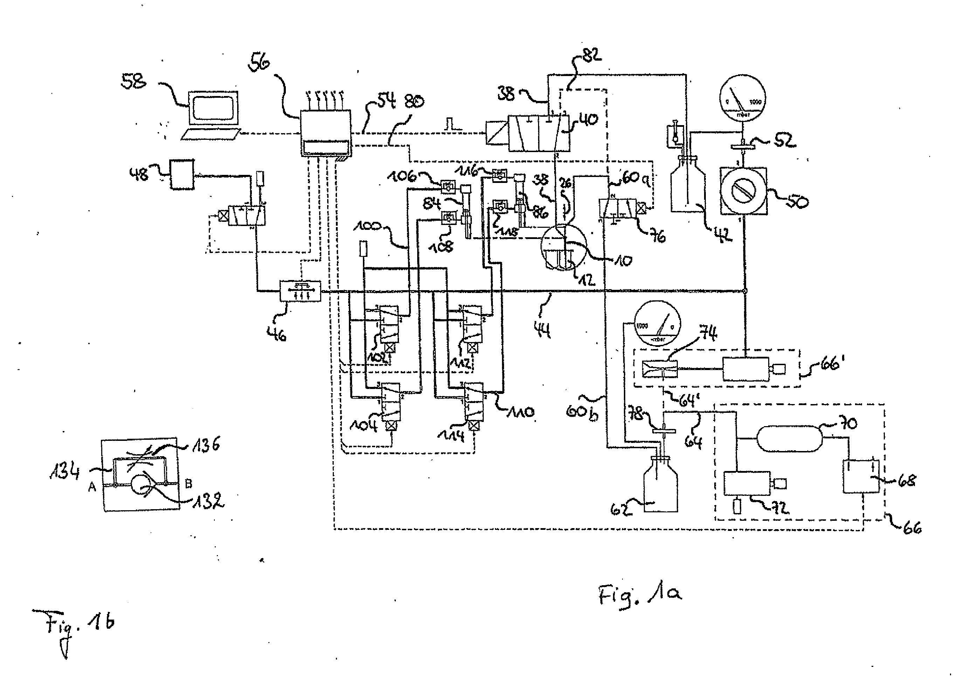

Fig. 1a zeigt schematisch eine erfindungsgemäße Pipettiervorrichtung mit den für ihren Betrieb wesentlichen Komponenten in einer Übersichtsdarstellung. In der Zeichnung der Fig. 1a sind mit einem Versorgungsdruck beaufschlagte Druckleitungen durch doppelt durchgezogene Linien, mit einem herabgesetzten Überdruck oder Unterdruck beaufschlagte Druckleitungen einfach durchgezogene Linien und Steuersignalleitungen gestrichelt dargestellt. Im Zentrum der Pipettiervorrichtung ist eine erfindungsgemäße Koaxialnadel 10 gezeigt, die teilweise in einen Pipettierbehälter 12 eintaucht. Bei dem Pipettierbehälter 12 kann es sich beispielsweise um eine zylindrische Probenkammer einer Wellplatte oder einer Petrischale handeln, die eine Zellprobe und gegebenenfalls eine der Probe zugeführte Flüssigkeit enthält und in den Strahlengang eines inversen optischen Mikroskops (in Fig. 1a nicht gezeigt) eingeführt ist.

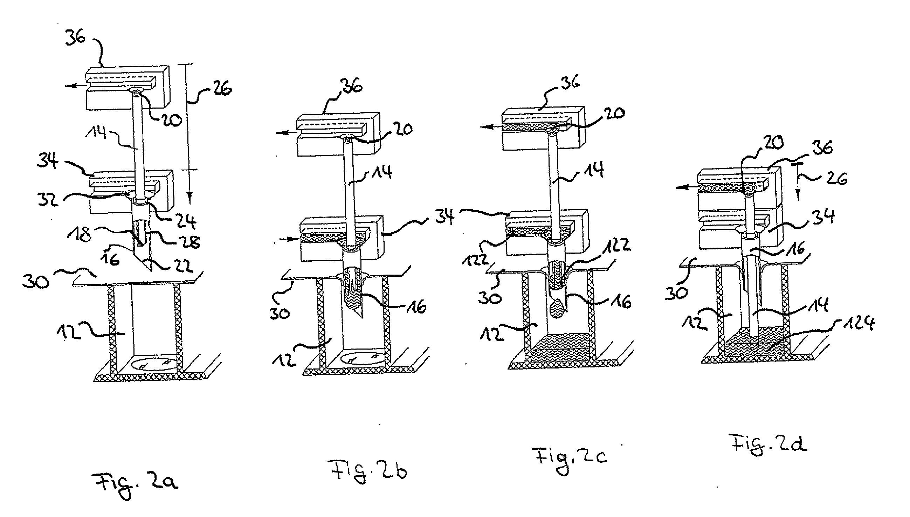

Aufbau und Funktion der Koaxialnadel 10 werden nachstehend mit Bezug auf Fig. 2a - 2d detailliert beschrieben.

Fig. 2a zeigt die Koaxialnadel 10 in einer Parkposition oberhalb des mit einer Abdeckfolie 30 versiegelten Pipettierbehälters 12. Wie aus der Abbildung hervorgeht, umfasst die Koaxialnadel 10 eine Sauglanze 14 sowie eine Einführlanze 16. Beide Lanzen sind in Form eines metallischen Hohlzylinders ausgebildet, wobei die Einführlanze 16 kürzer als die Sauglanze 14 ist und einen Innendurchmesser aufweist, der den Außendurchmesser der Sauglanze übertrifft.

In der beschriebenen Ausführungsform weisen sowohl die Sauglanze 14 als auch die Einführlanze 16 die Form hohler Kreiszylinder auf. Jedoch können je nach Einsatzbereich der Nadel anders geformte Hohlkörper verwendet werden. Im Rahmen der vorliegenden Erfindung meint der Begriff Sauglanze jeden Hohlkörper, der zum Ansaugen einer Flüssigkeit geeignet ist. Entsprechend meint der Begriff Einführlanze jeden Hohlkörper, der im Zusammenwirken mit der Sauglanze zum Einbringen einer Flüssigkeit in einen Pipettierbehälter 12 geeignet ist. Die Einführlanze kann insbesondere zum Durchstechen einer Abdeckfolie 30 ausgebildet sein.

Wie aus Fig. 2a ersichtlich, weist die Sauglanze 14 ein dem Pipettierbehälter 12 zugewandtes erstes offenes Ende 18 und ein dem ersten offenen Ende 18 entlang einer Axialrichtung 26 gegenüberliegendes zweites offenes Ende 20 auf. Entsprechend weist die Einführlanze 16 ein dem Pipettierbehälter 12 zugewandtes erstes offenes Ende 22 und ein dem ersten offenen Ende 22 gegenüberliegendes zweites offenes Ende 24 auf. Die Sauglanze 14 ist mit ihrem ersten offenen Ende 18 in die Einführlanze 16 eingeführt und darin verschiebbar, wobei die Einführlanze 16 die Sauglanze 14 teilweise koaxial umschließt, die Sauglanze 14 aber aufgrund ihrer größeren Länge stets zumindest auf einer Seite aus der Einführlanze 16 hervorragt. Da der Innendurchmesser der Einführlanze 16 größer als der Außendurchmesser der Sauglanze 14 ist, wird dort, wo die Einführlanze 16 die Sauglanze 14 koaxial umschließt, zwischen einer Außenwand der Sauglanze 14 und einer Innenwand der Einführlanze 16 ein Flüssigkeitskanal 28 ausgebildet.

Das erste offene Ende 22 der Einführlanze 16 ist bei der in Fig. 2a gezeigten Anordnung in Form einer schräg zur Axialrichtung 26 ausgebildeten Spitze ausgeführt. Diese Spitze dient zum Durchstoßen der Abdeckfolie 30 beim Absenken der Koaxialnadel 10 in den Pipettierbehälter 12.

Die Einführlanze 16 ist an ihrem zweiten offenen Ende 24 mit einem Einführtrichter 32 versehen, über den aus einem mit der Einführlanze 16 verbundenen Einführstutzen 34 eine Flüssigkeit in den Flüssigkeitskanal 28 eingeführt werden kann. Dagegen ist die Sauglanze 14 an ihrem zweiten offenen Ende 20 mit einem Absaugstutzen 36 verbunden, über den eine Flüssigkeit aus dem Inneren der Sauglanze 14 abgesaugt werden kann.

Wie aus Fig. 1 ersichtlich, ist der Einführstutzen 34 über eine erste Verbindungsleitung 38 und ein Zuführventil 40 mit einem ersten Vorratsbehälter 42 verbunden, in dem eine in den Pipettierbehälter 12 zu injizierende Flüssigkeit bevorratet ist. Die erste Verbindungsleitung 38 kann als flexibler Kunststoffschlauch ausgebildet sein. Der erste Vorratsbehälter 42 ist über eine erste Druckleitung 44 und einen Druckschalter 46 mit einer Druckquelle 48 verbunden. Bei der Druckquelle 48 kann es sich um eine mit Stickstoff als Arbeitsgas betriebene Druckquelle handeln, die einen Arbeitsdruck von ca. 5 bar vorsieht. Dieser Arbeitsdruck wird über einen zwischen der Druckquelle 48 und dem ersten Vorratsbehälter 42 angeordneten Druckminderer 50 in einen verringerten Druck von ca. 0,2 bis 0,3 bar umgewandelt. Ein dem Druckminderer 50 nachgeschalteter Filter 52 schützt den ersten Vorratsbehälter 42 und die in ihr bevorratete Flüssigkeit vor Kontamination.

Bei dem Zuführventil 40 handelt es sich um ein sogenanntes 3/2-Ventil, das magnetisch betrieben ist und drei Anschlüsse mit zwei Schaltzuständen vorsieht. Die Darstellung der Fig. 1 zeigt beide möglichen Schaltzustände des Zuführventils 40 nebeneinander, nämlich auf der linken Seite das zum Zuführen einer Flüssigkeit aus dem ersten Vorratsbehälter 42 an die Koaxialnadel 10 freigeschaltete Zuführventil, in dem die Anschlüsse 1 und 2 in Durchlassrichtung verbunden sind, und auf der rechten Seite das gesperrte Ventil, in dem die Anschlüsse 2 und 3 verbunden sind und die Flüssigkeitszufuhr von dem ersten Vorratsbehälter 42 an die Pipette 10 gesperrt ist.

Über eine erste Steuerleitung 54, die das Zuführventil 40 mit einer Steuereinheit 56 verbindet, kann elektronisch mit einem vorgewählten Taktmuster zwischen den beiden Schaltzuständen des Zuführventils 40 gewechselt und auf diese Weise die Flüssigkeitszufuhr an die Pipette gesteuert werden. Typische Schaltzeiten eines solchen Ventils liegen im Bereich zwischen 10 ms und 50 ms. Eine mit der Steuereinheit 56 verbundene Eingabe/Ausgabe-Einheit 58 dient zur Auswahl und Eingabe geeigneter Taktsequenzen sowie zur Steuerung und Überwachung der Pipettiervorrichtung.

Das erste Zuführventil 40 ist der Koaxialnadel 10 eng benachbart angeordnet, wobei der Abstand zwischen dem zweiten offenen Ende 24 der Einführlanze 16 und dem Zuführventil 40 vorzugsweise kleiner als der zehnfache Durchmesser der ersten Verbindungsleitung 38 gewählt ist oder nicht mehr als 2 cm beträgt. Dadurch lassen sich Menge und Zeitpunkt der Flüssigkeitszuleitung besonders genau festlegen.

Das zweite offene Ende 20 der Sauglanze 14 ist über den Absaugstutzen 36 und eine zweite Verbindungsleitung 60a, 60b mit einem zweiten Vorratsbehälter 62 verbunden, der seinerseits über eine zweite Druckleitung 64 an eine Unterdruckquelle 66 angeschlossen ist. Die zweite Verbindungsleitung 60a, 60b kann gleichfalls einen biegsamen Kunststoffschlauch umfassen.

In einer ersten Ausführungsform umfasst die Unterdruckquelle 66 neben einer konventionellen Vakuumpumpe 68, beispielsweise einer Drehschieberpumpe, ein Puffervolumen 70 sowie einen Nadelventil-Bypass 72.

Eine alternative Ausführungsform mit einer Unterdruckquelle 66' ist in der Zeichnung der Fig. 1 gleichfalls dargestellt. In dieser alternativen Ausführungsform ist der zweite Vorratsbehälter 62 über eine zweite Druckleitung 64' an den Niederdruckanschluss einer Venturi-Düse 74 gekoppelt. Die Venturi-Düse 74 ist ihrerseits an die erste Druckleitung 44 und damit an die Druckquelle 48 angeschlossen und wandelt auf diese Weise einen von der Druckquelle 48 bereitgestellten Überdruck in der ersten Druckleitung 44 in einen Unterdruck in der zweiten Druckleitung 64' um.

Über ein Absaugventil 76 in der zweiten Verbindungsleitung 60a, 60b kann der Absaugstutzen 36 und das mit ihm verbundene zweite offene Ende 20 der Sauglanze 14 gesteuert mit Unterdruck (in der gezeigten Ausführungsform -50 mbar bis -100 mbar) beaufschlagt werden, so dass eine Flüssigkeit aus dem Pipettierbehälter 12 durch die Sauglanze 14, die zweite Verbindungsleitung 60a, 60b und das Absaugventil 76 in den zweiten Vorratsbehälter 62 abgesaugt werden kann. Ein Filter 78 in der zweiten Druckleitung 64 bzw. 64' verhindert das Absaugen von Flüssigkeiten bzw. von deren Ausgasungen aus dem zweiten Vorratsbehälter 62 in die Unterdruckquelle 66 bzw. 66'.

Bei dem Absaugventil 76 kann es sich wie bei dem vorstehend beschriebenen Zuführventil 40 um ein elektronisch gesteuertes 3/2-Ventil handeln, das über eine zweite Steuerleitung 80 mit der Steuereinheit 56 verbunden ist. Der in der Darstellung der Fig. 1 links gezeigte erste Schaltzustand, in dem die Anschlüsse 2 und 3 verbunden sind, ist der aktive Schaltzustand des Absaugventils, in dem die Koaxialnadel 10 über die zweite Verbindungsleitung 60a, 60b mit der Unterdruckquelle 66 bzw. 66' verbunden ist. Der inaktive bzw. geschlossene Schaltzustand, in dem die Anschlüsse 1 und 2 des Absaugventils 76 verbunden sind, ist rechts benachbart dargestellt.

Das Zuführventil 40 und das Absaugventil 76 können in der in Fig. 1 dargestellten Ausführungsform über eine Zwischenverbindung 82 gekoppelt werden, die den Anschluss 3 des Zuführventils mit dem Anschluss 2 des Absaugventils verbindet. Diese Zwischenverbindung 82 ermöglicht das Entleeren und das Evakuieren der ersten Verbindungsleitung 38 sowie des Einführstutzens 34 und damit des Flüssigkeitskanals 28 mittels der Unterdruckquelle 66 bzw. 66', wenn die Pipettiervorrichtung, beispielsweise für Reinigungs- oder Wartungsarbeiten, aller Flüssigkeit entleert werden soll.

Die schematische Übersichtsdarstellung der Fig. 1 zeigt auch die pneumatische Antriebseinheit zum Betrieb der Koaxialnadel 10. Die dargestellte Pipettiervorrichtung sieht für die Einführlanze 16 und die Sauglanze 14 zwei getrennte Antriebseinheiten 84 bzw. 86 vor, so dass sich die Einführlanze 16 und die Sauglanze 14 unabhängig voneinander entlang ihrer gemeinsamen Axialrichtung 26 verfahren lassen.

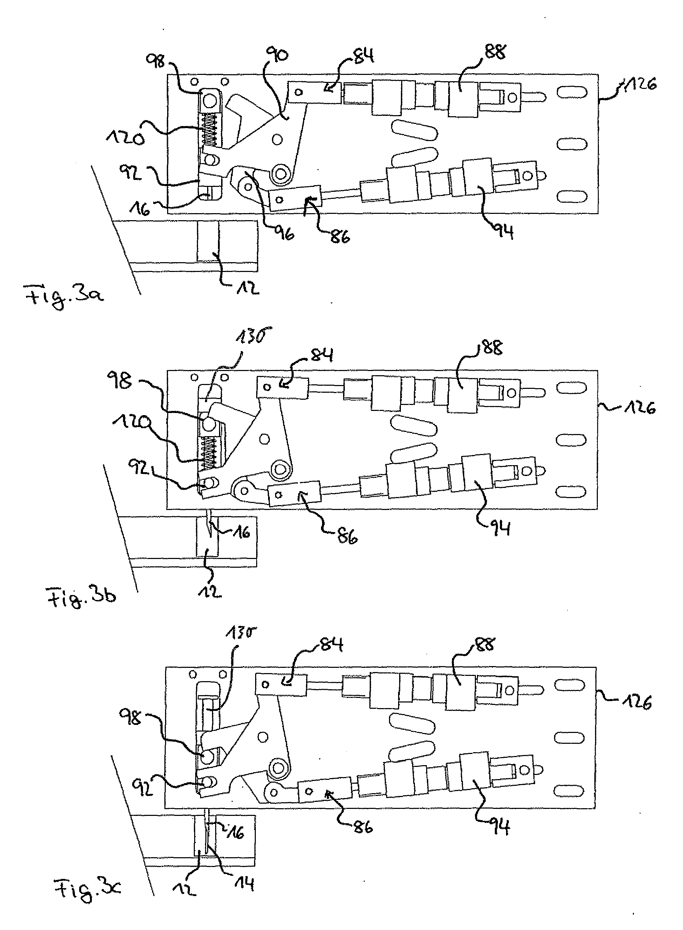

Die Antriebseinheiten 84 bzw. 86 werden nachfolgend mit Bezug auf Fig. 3a detailliert beschrieben.

Die erste Antriebseinheit 84 umfasst einen ersten Druckkolben 88 sowie ein erstes Verbindungselement 90 und ein erstes Befestigungselement 92. Das erste Befestigungselement 92 ist direkt mit der Einführlanze 16 verbunden und umfasst auch den in der Darstellung der Fig. 3a nicht gezeigten Einführstutzen 34. Über das erste Verbindungselement 90 ist das erste Befestigungselement 92 mit dem ersten Druckkolben 88 verbunden. Die Bewegung des ersten Druckkolbens 88 wird auf diese Weise über das erste Verbindungselement 90 in eine Bewegung der Einführlanze 16 entlang der Axialrichtung 26 (vgl. Fig. 2) übersetzt.

Die zweite Antriebseinheit 86 zum Verfahren der Sauglanze 14 ist ähnlich aufgebaut und umfasst einen zweiten Druckkolben 94, ein mit dem zweiten Druckkolben 94 und dem ersten Verbindungselement 90 verbundenes zweites Verbindungselement 96 sowie ein zweites Befestigungselement 98. Das zweite Befestigungselement 98 ist unmittelbar mit der Sauglanze 14 verbunden und umfasst auch den in der Darstellung der Fig. 3a nicht gezeigten Absaugstutzen 36. Bei Aktivierung des zweiten Druckkolbens 94 greift das zweite Verbindungselement 96 an dem zweiten Befestigungselement 98 an und ermöglicht auf diese Weise das Verfahren der Sauglanze 14 entlang der Axialrichtung 26.

Die erfindungsgemäße Antriebseinheit sowie der erfindungsgemäße Aufbau der Koaxialnadel 10 erlauben die Ausbildung einer verfahrbaren Pipettiereinheit 126, welche sowohl die Koaxialnadel 10 als auch die erste Antriebsvorrichtung 84 und die zweite Antriebseinheit 86 umfasst und deren Bauhöhe entlang der Axialrichtung 26 derart gering ist, dass die Pipettiereinheit 126 zwischen einen Pipettierbehälter 12 und eine oberhalb des Pipettierbehälters 12 angeordnete Beleuchtungseinheit eines inversen optischen Mikroskops konventioneller Bauart eingeführt werden kann, ohne dass sich der Mikroskopiebetrieb und der Pipettierbetrieb gegenseitig stören. Insbesondere lassen sich Pipettiereinheiten 126 mit Bauhöhen entlang der Axialrichtung 26 von unter 4 cm erreichen.

Wie in der Übersichtsdarstellung der Fig. 1 veranschaulicht, ist der erste Druckkolben 88 der ersten Antriebseinheit 84 über eine dritte Druckleitung 100 mit der ersten Druckleitung 44 und also der Druckquelle 48 verbunden. Die dritte Druckleitung 100 ist über zwei Antriebsventile 102 bzw. 104 an die erste Druckleitung 44 gekoppelt, so dass sich in Abhängigkeit des Schaltzustands der erste Druckkolben 88 beidseitig mit Druck beaufschlagen lässt, wobei eine Beaufschlagung von einem Ende über das erste Verbindungselement 90 in eine Abwärtsbewegung der Einführlanze 16, eine Beaufschlagung vom entgegengesetzten Ende dagegen in eine Aufwärtsbewegung der Einführlanze 16 entlang der Axialrichtung umgesetzt wird.

Bei den Antriebsventilen 102 und 104 handelt es sich wiederum um elektronisch ansteuerbare 3/2-Ventile, deren Schaltzustände in der Darstellung der Fig. 1 jeweils untereinander veranschaulicht sind und die über gestrichelt dargestellte Steuerleitungen wiederum mit der Steuereinheit 56 verbunden sind.

In beiden Ästen der dritten Druckleitung 100 sind dem ersten Druckkolben 88 Schnellentlüftungs-Drosselventile 106 bzw. 108 vorgeschaltet, die jeweils den Druckaufbau am ersten Druckkolben 88 verzögern und auf diese Weise eine Einstellung der Verfahrgeschwindigkeit der Einführlanze 16 ermöglichen.

Der zweite Druckkolben 94 ist entsprechend über eine vierte Druckleitung 110, die wiederum mit zwei elektronisch ansteuerbaren und mit der Steuereinheit 56 verbundenen 3/2-Ventilen 112 bzw. 114 ausgebildet ist, mit der ersten Druckleitung 44 verbunden. Der Antrieb des zweiten Druckkolbens 94 erfolgt dabei analog zum vorstehend beschriebenen Antrieb des ersten Druckkolbens 88, wobei wiederum Schnellentlüftungs-Drosselventile 116 bzw. 118 in beiden Ästen der vierten Druckleitung 110 vorgesehen sind.

Die Wirkungsweise und Funktion der verwendeten Schnellentlüftungs-Drossenventile 106, 108, 116 und 118 ist schematisch in dem vergrößerten Ausschnitt der Fig. 1b veranschaulicht. Ein solches Ventil umfasst ein Rückschlagventil 132, das bei einem Strömungsfluss von der der Druckquelle 48 zugewandten Seite des Drosselventils, die in Fig. 1b mit A bezeichnet ist, zu der dem Hubzylinder der Pipettiereinheit zugewandten, in Fig. 1b mit B bezeichneten Seite des Ventils sperrt und die Strömung in der entgegengesetzten Richtung freigibt. Das Drosselventil weist darüber hinaus einen Bypass 134 auf, der das Rückschlagventil 132 umgeht und ein regelbares Reduzierventil 136 umfasst.

Der Druckaufbau am Hubzylinder erfolgt verlangsamt, weil das Druckmedium in Strömungsrichtung A→B allein durch den Bypass 134 strömen kann, dessen Kapazität durch das Reduzierventil 136 begrenzt wird. Der Druckabbau am Hubzylinder kann dagegen schlagartig erfolgen, weil dem Druckmedium in Strömungsrichtung B→A sowohl das Rückschlagventil 132 als auch das Reduzierventil 136 offenstehen. Durch geeignete Wahl der Durchflusskapazität am Reduzierventil 136 lässt sich der Druckaufbau und damit die Verfahrgeschwindigkeit von Einführlanze 16 bzw. Sauglanze 14 entsprechend einstellen.

Zum Pipettieren wird die die Koaxialnadel 10 sowie die erste Antriebseinheit 84 und die zweite Antriebseinheit 86 umfassende Pipettiereinheit 126 über einem ausgewählten Pipettierbehälter 12 positioniert. Diese Positionierung kann einerseits erfolgen, indem der Pipettierbehälter 12 vermittels einer beweglichen Positioniereinrichtung auf dem Objekttisch eines Mikroskops unter die Koaxialnadel 10 verfahren wird. Wie bereits ausgeführt wurde, ermöglicht die erfindungsgemäße Pipettiervorrichtung es alternativ jedoch ebenso, die Pipettiereinheit 126 verfahrbar auszubilden. Die Pipettiereinheit 126 kann dazu mit einer (in der Darstellung der Fig. 1 nicht gezeigten) Antriebsvorrichtung verbunden werden, die ein Verfahren der Pipettiereinheit 126 entlang der Ebene des Objekttisches und ggf. auch senkrecht dazu gestattet. Beispielsweise kann eine verfahrbare Pipettiereinheit 126 zum Befüllen und Entleeren einer ausgewählten Kammer des Pipettierbehälters in den Strahlengang des Mikroskops geschwenkt und während des nachfolgenden Mikroskopiervorgangs aus dem Strahlengang hinausgeschwenkt werden. Dadurch lässt sich ein störungsfreier Mikroskopierbetrieb auch dann gewährleisten, wenn in Transmission beobachtet wird.

Aufgrund der geringen Bauhöhe der Pipettiereinheit 126 entlang der Axialrichtung 26 lässt sich die erfindungsgemäße Pipettiervorrichtung 126 zusammen mit einer Vielzahl weit verbreiteter Mikroskop-Baureihen einsetzen, ohne dass sich der Pipettierbetrieb und der Mikroskopiebetrieb gegenseitig stören. Insbesondere lässt sich die Koaxialnadel 10 in den optischen Strahlengang zwischen dem Objekttisch mit Pipettierbehälter 12 und einer oberhalb des Objekttisches angeordneten Beleuchtungseinrichtung des Mikroskops einführen. Die erfindungsgemäße Pipettiereinrichtung lässt sich daher unabhängig davon einsetzen, ob das zur Beobachtung verwendete Mikroskop eine Beleuchtung von oberhalb des Objekts, von unterhalb des Objekts oder, wie das in der Patentschrift US 7,092,151 B2 beschriebene Mikroskop, wahlweise von oberhalb oder unterhalb des Objekttisches vorsieht. Darin liegt einer der besonderen Vorteile der erfindungsgemäßen Koaxialnadel und der erfindungsgemäßen Pipettiervorrichtung.

Zudem bietet sich die erfindungsgemäße Pipettiervorrichtung aufgrund der kompakten Bauweise in besondere Weise für die Verwendung in Klimakammern an.

Das erfindungsgemäße Verfahren zur Pipettierung wird nachstehend beispielhaft anhand der in den Fig. 2, 3 und 4 veranschaulichten Ausführungsformen erläutert. Dabei zeigen die Fig. 2a, 3a und 4a die Koaxialnadel 10 in einer Parkposition, die Fig. 2b und 2c sowie 3b und 4b die Koaxialnadel 10 in einer lnjektionsposition und die Fig. 2d, 3c und 4c die Koaxialnadel 10 in einer Absaugposition.

In der in den Fig. 2a, 3a und 4a dargestellten Parkposition befindet sich die Koaxialnadel 10 oberhalb eines mit einer Abdeckfolie 30 versiegelten Pipettierbehälters 12, der die zu untersuchende Zellprobe enthält.

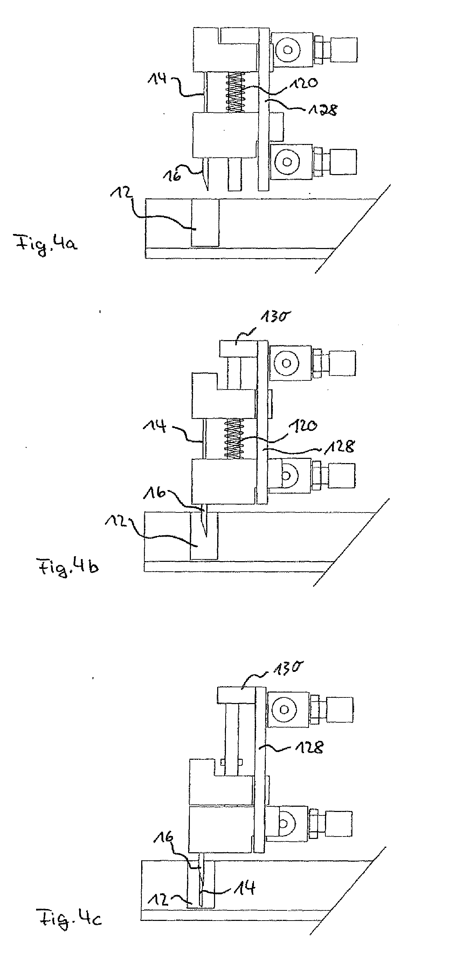

Zum Einführen der Koaxialnadel 10 in den Pipettierbehälter 12 wird der erste Druckkolben 88 über die dritte Druckleitung 100 mit Druck beaufschlagt, so dass die über das erste Befestigungselement 92 und das erste Verbindungselement 90 mit dem ersten Druckkolben 88 verbundene Einführlanze entlang der Axialrichtung 26 nach unten verfährt. Gleichzeitig wird das zweite Verbindungselement 96, das mit dem ersten Verbindungselement 90 gekoppelt ist, in Kontakt mit dem zweiten Befestigungselement 98 gebracht, wie in der Darstellung der Fig. 3b illustriert ist. Wie aus der Darstellung der Fig. 3a ersichtlich, ist das erste Befestigungselement 92 der Einführlanze 16 mit dem zweiten Befestigungselement 98 der Sauglanze 14 über eine in der Parkposition entspannte Feder 120 und einen Mitnehmerbolzen 130 gekoppelt. Wie in Fig. 4a gezeigt, sind das erste 92 und zweite Befestigungselement 98 zudem gemeinsam in einer in Axialrichtung 26 verlaufenden Führungsschiene 128 geführt. Verfährt das erste Befestigungselement 92 und mit ihm die Einführlanze 16 entlang der Führungsschiene 128 in den Pipettierbehälter 12, zieht ein mit dem ersten Befestigungselement 92 verbundener Bolzen 130, dessen verbreiterte Deckfläche am zweiten Befestigungselement 98 angreift, die fest mit dem zweiten Befestigungselement 98 verbundene Sauglanze 14 nach. Unter Bewahrung ihrer relativen Lage verfahren daher sowohl die Einführlanze 16 als auch die Sauglanze 14 in den Pipettierbehälter 12, und die Einführspitze der Einführlanze 16 durchstößt die Abdeckfolie 30. Die Koaxialnadel befindet sich nun in der in den Fig. 2b und 2c sowie 3b und 4b dargestellten Injektionsposition.

Die einzubringende Flüssigkeit wird durch Aktivieren des Zuführventils 40 unter Druck aus dem ersten Vorratsbehälter 42 über die erste Verbindungsleitung 38, den Einführstutzen 34 und den Einführtrichter 32 in den Flüssigkeitskanal 28 zwischen Sauglanze 14 und Einführlanze 16 geleitet. Wie in Fig. 2b dargestellt, umfließt die Flüssigkeit die Sauglanze 14 und sammelt sich an ihrem ersten offenen Ende 18 zu einem Tropfen. In der gezeigten Ausführungsform beträgt der Abstand des dem Pipettierbehälter 12 zugewandten ersten offenen Endes 18 der Sauglanze 14 von einem dem Pipettierbehälter 12 zugewandten ersten offenen Ende 22 der Einführlanze während des Einbringens der Flüssigkeit in den Pipettierbehälter 12 ca. 1 mm. Durch geeignete Wahl dieses Abstands, der sich in der gezeigten Ausführungsform durch Verschieben des Bolzens 130 justieren lässt, kann die Tropfengröße und damit das injizierte Flüssigkeitsvolumen entsprechend eingestellt werden. Durch einen Druckstoß des Zuführventils 40 wird der Tropfen aus der Koaxialnadel 10 gelöst und fällt in den Pipettierbehälter 12. Neben der Tropfeninjektion ist auch eine Injektion der Flüssigkeit im stetigen Fluss möglich, indem das Zuführventil 40 über die Steuereinheit 56 für einen längeren Zeitraum geöffnet wird.

Indem das zweite offene Ende 20 der Sauglanze 14 über die zweite Verbindungsleitung 60a, 60b und das Absaugventil 76 mit der Unterdruckquelle verbunden wird, können in einem nachfolgenden, in Fig, 2c illustrierten Schritt ggf. nach dem Lösen des Tropfens in dem Flüssigkeitskanal 28 verbliebene Flüssigkeitsreste durch das Innere der Sauglanze 14 in den zweiten Vorratsbehälter 62 abgesaugt werden.

Nachfolgend kann die Koaxialnadel 10 aus dem Pipettierbehälter 12 wieder entfernt werden, indem die Einführlanze 16 durch Aktivierung der ersten Antriebseinheit 84 entlang der Führungsschiene 128 zurück in die Ausgangsposition bewegt wird. Da das zweite Befestigungselement 98 der Sauglanze 14 über die Feder 120 mit dem ersten Befestigungselement 92 der Einführlanze 16 verbunden ist, wird dabei gleichzeitig auch die Sauglanze 14 unter Beibehaltung ihrer relativen Lage zur Einführlanze 16 aus dem Pipettierbehälter 12 zurückgefahren. Die Koaxialnadel 10 kann nun über einem weiteren Pipettierbehälter positioniert werden, um den Injektionsvorgang zu wiederholen.

Die erfindungsgemäße Pipettiervorrichtung kann allerdings ebenso zum Absaugen einer Flüssigkeit aus einem Pipettierbehälter 12 verwendet werden. Dazu werden nach dem vorstehend beschriebenen Verfahren die Einfiührlanze 16 und die Sauglanze 14 zunächst gemeinsam in einen ausgewählten Pipettierbehälter 12 eingeführt. Im Anschluss an das Einbringen einer Flüssigkeit oder alternativ auch ohne einen solchen vorhergehenden Injektionsschritt wird die Koaxialnadel 10 dazu in die in den Fig. 2d, 3c und 4c veranschaulichte Absaugposition verfahren. Ausgehend von der in Fig. 2b, 2c, 3b und 4b veranschaulichten Injektionsposition, wird der zweite Druckkolben 94 über die vierte Druckleitung 110 aktiviert, so dass das mit dem zweiten Druckkolben 94 verbundene zweite Verbindungselement 96 in das zweite Befestigungselement 98 eingreift und die Sauglanze 14 unter Spannung der Feder 120 entlang der Führungsschiene 128 in Axialrichtung 26 soweit abgesenkt wird, bis das erste offene Ende 18 der Sauglanze 14 in das in dem Pipettierbehälter 12 angesammelte Flüssigkeitsvolumen 124 eintaucht. Die Lage der Einführlanze 16 bleibt dabei unverändert. Durch Verbinden des zweiten offenen Endes 20 der Sauglanze 14 über den Absaugstutzen 36 und die zweite Verbindungsleitung 60a, 60b mit der Unterdruckquelle 66 bzw. 66' kann das im Pipettierbehälter 12 angesammelte Flüssigkeitsvolumen 124 nachfolgend teilweise oder vollständig durch das Innere der Sauglanze 14 in den zweiten Vorratsbehälter 62 abgesaugt werden. Nach erfolgtem Absaugen wird die Feder 120 durch Zurückfahren der Antriebseinheit 86 bzw. des Verbindungselementes 96 freigegeben, so dass das Befestigungselement 98 unter der Federkraft nach oben gedrückt wird und die mit dem Befestigungselement 98 verbundene Sauglanze 14 entlang der Axialrichtung 26 in ihre in Fig. 2c, 3b und 4b dargestellte Ausgangsposition zurückschnellt. Das Verfahren kann nun wie obenstehend beschrieben fortgesetzt werden.

Nach dem vorstehend beschriebenen Verfahren lassen sich mit der erfindungsgemäßen Pipettiervorrichtung Flüssigkeiten schnell, zuverlässig und genau dosiert in einen versiegelten Pipettierbehälter einbringen oder aus einem versiegelten Pipettierbehälter entfernen. In vielen Versuchsreihen ist allerdings die sequentielle Zuführung bzw. Entfernung unterschiedlicher Flüssigkeiten oder einer Flüssigkeit in unterschiedlichen Konzentrationen gewünscht. Ein Kontakt der Flüssigkeiten untereinander muss dabei häufig verhindert werden, um Kontaminationen oder unerwünschte Reaktionen auszuschließen.

Das erfindungsgemäße Verfahren und die erfindungsgemäße Vorrichtung können zu diesem Zweck mit mehreren getrennten Flüssigkeitskreisläufen ausgeführt werden, die jeweils eine Koaxialnadel umfassen und im Übrigen der vorstehend beschriebenen Ausführungsform entsprechen. Zur Injektion einer der Flüssigkeiten in einen ausgewählten Pipettierbehälter oder zum Absaugen einer der Flüssigkeiten aus einem ausgewählten Pipettierbehälter kann die entsprechende Koaxialnadel dann im Revolversystem ausgewählt werden.

Alternativ kann anstelle mehrerer Koaxialnadeln auch eine einzige Koaxialnadel verwendet werden, die zum Anschluss an unterschiedliche Flüssigkeitskreisläufe ausgebildet ist und darüber hinaus mit einem separaten Reinigungskreislauf verbunden werden kann. Zwischen dem Anschluss an unterschiedliche Flüssigkeitskreisläufe kann auf diese Weise eine Reinigung der Koaxialnadel durchgeführt werden, um eine Kontamination wirkungsvoll auszuschließen. Die Reinigung kann sowohl durch Spülen des Leitungssystems mit einer separaten Spülflüssigkeit als auch durch Absaugen der verbliebenen Pipettierflüssigkeiten aus dem Flüssigkeitskreislauf erfolgen.

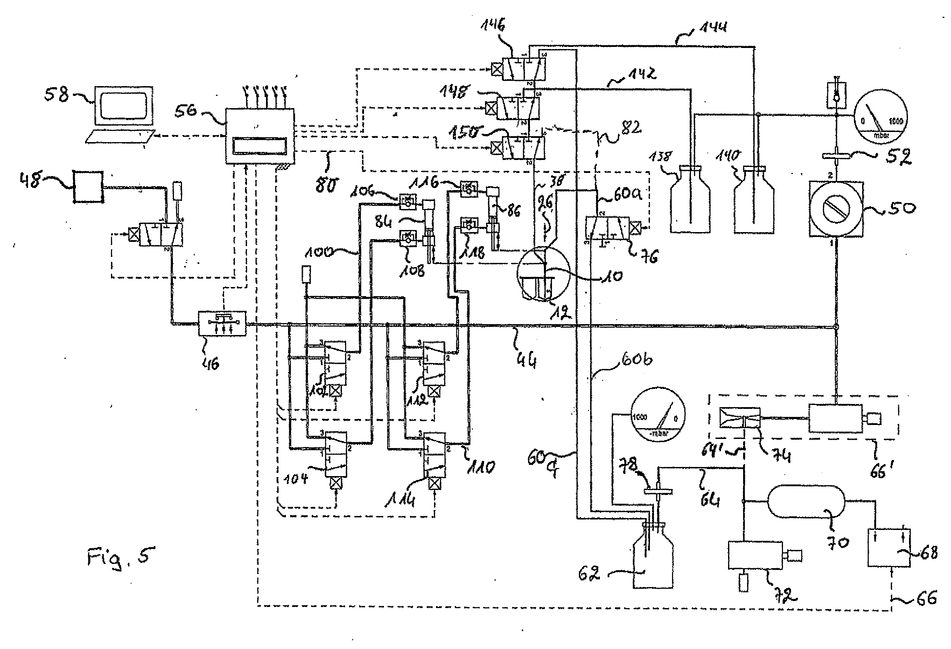

Fig. 5 zeigt eine entsprechende Weiterbildung der erfindungsgemäßen Pipettiervorrichtung in einer schematischen Übersicht. Die in Fig. 5 dargestellte Pipettiervorrichtung ist in wesentlichen Teilen mit der in Fig. 1a dargestellten Pipettiervorrichtung identisch, und entsprechende Bauteile sind mit gleichen Bezugszeichen versehen. Jedoch weist die in Fig. 5 gezeigte Pipettiervorrichtung anstelle des ersten Vorratsbehälters 42 zwei Vorratsbehälter auf: einen Vorratsbehälter 138 für eine erste Pipettierflüssigkeit und einen Vorratsbehälter 140 für eine zweite Pipettierflüssigkeit. Zudem weist die erfindungsgemäße Weiterbildung statt des einen Zuführventils 40 drei Zuführventile auf: ein erstes Zuführventil 146, ein zweites Zuführventil 148 sowie ein drittes Zuführventil 150. Bei dem ersten, zweiten und dritten Zuführventil handelt es sich in der gezeigten Ausführungsform um über die Steuereinheit 56 elektronisch ansteuerbare 3/2-Ventile, wie sie obenstehend mit Bezug auf die Abbildung der Fig. 1a erläutert sind.

Über die Verbindungsleitung 142 bzw. die Verbindungsleitung 144 kann der Einführlanze 16 wahlweise unter Druck eine definierte Menge der ersten Pipettierflüssigkeit aus dem Vorratsbehälter 138 oder der zweiten Pipettierflüssigkeit aus dem Vorratsbehälter 140 zugeführt werden. Die Verbindungsleitung 142 für die erste Pipettierflüssigkeit ist dazu mit dem Eingang 1 des zweiten Zuführventils 148 verbunden. Der Ausgang 2 des zweiten Zuführventils 148 steht wiederum mit dem Eingang 1 des dritten Zuführventils 150 in Kontakt, dessen Ausgang über die erste Verbindungsleitung 38 zu der Einführlanze 16 führt. Durch Aktivieren des zweiten Zuführventils 148 und des dritten Zuführventils 150 wird daher Flüssigkeit aus dem Vorratsbehälter 138 für die erste Pipettierflüssigkeit an die Pipette geleitet. Das erste Zuführventil 146, das über die Verbindungsleitung 144 mit dem Vorratsbehälter 140 für die zweite Pipettierflüssigkeit in Verbindung steht, ist zu diesem Zeitpunkt abgekoppelt.

Soll der Pipette anstelle der ersten Pipettierflüssigkeit die zweite Pipettierflüssigkeit zugeführt werden, werden anstelle des zweiten Zuführventils 148 und des dritten Zuführventils 150 das erste Zuführventil 146 und das dritte Zuführventil 150 aktiviert. Die zweite Pipettierflüssigkeit kann auf diese Weise über die Verbindungsleitung 144 und das erste Zuführventil 146, das inaktive zweite Zuführventil 148 sowie das dritte Zuführventil 150 unter Druck zur Einführlanze 16 geleitet werden, während die über die Verbindungsleitung 142 mit dem inaktiven Eingang 1 des zweiten Zuführventils 148 verbundene erste Pipettierflüssigkeit abgekoppelt ist. Eingang 3 des ersten Zuführventils 146 ist über eine Verbindungsleitung 60c mit dem zweiten Vorratsbehälter 62 verbunden, der die aus dem Leitungssystem der Pipettiervorrichtung abgesaugten Rückstände aufnimmt.

Mit der beschriebenen Weiterbildung kann wahlweise die erste oder die zweite Pipettierflüssigkeit injiziert werden. Um eine wechselseitige Kontamination der Pipettierflüssigkeiten zu verhindern, kann das Leitungssystem zwischen dem Injizieren der ersten Pipettierflüssigkeit und dem Injizieren der zweiten Pipettierflüssigkeit durch Absaugen gereinigt werden, beispielsweise indem die erste Verbindungsleitung 38 über den Anschluss 3 des dritten Zuführventils 150 mit dem Absaugventil 76 verbunden ist, wie entsprechend der Abbildung der Fig. 1a durch die Zwischenverbindung 82 illustriert, oder beispielsweise durch Aktivieren des Ventils 150 und der Verbindung 2-3 über die inaktiven Ventile 148 und 146 und die Verbindungsleitung 60c in den Behälter 62.

Die erfindungsgemäße Pipettiervorrichtung kann in gleicher Weise durch Hinzufügen weiterer Vorratsbehälter und Zuführventile auf den Betrieb mit mehr als zwei Pipettierflüssigkeiten erweitert werden.

Die vorstehend beschriebenen Ausführungsformen und die illustrierenden Zeichnungen dienen lediglich der Veranschaulichung der erfindungsgemäßen Vorrichtung und des erfindungsgemäßen Verfahrens und sollen keinesfalls als Beschränkung missverstanden werden. Der Schutzbereich der Erfindung ergibt sich allein aus den nachfolgenden Ansprüchen.

### Bezugszeichensliste

- 10: Koaxialnadel
- 12: Pipettierbehälter
- 14: Sauglanze
- 16: Einführlanze
- 18: erstes offenes Ende der Sauglanze 14
- 20: zweites offenes Ende der Sauglanze 14
- 22: erstes offenes Ende der Einführlanze 16
- 24: zweites offenes Ende der Einführlanze 16
- 26: Axialrichtung
- 28: Flüssigkeitskanal
- 30: Abdeckfolie
- 32: Einführtrichter
- 34: Einführstutzen
- 36: Absaugstutzen
- 38: erste Verbindungsleitung
- 40: Zuführventil
- 42: erster Vorratsbehälter
- 44: erste Druckleitung
- 46: Druckschalter
- 48: Druckquelle
- 50: Druckminderer
- 52: Filter
- 54: erste Steuerleitung
- 56: Steuereinheit
- 58: Eingabe/Ausgabe-Einheit
- 60a, 60b, 60c: zweite Verbindungsleitungen
- 62: zweiter Vorratsbehälter
- 64, 64': zweite Druckleitung
- 66, 66': Unterdruckquelle
- 68: Vakuumpumpe
- 70: Puffervolumen
- 72: Nadelventil-Bypass
- 74: Venturi-Düse
- 76: Absaugventil
- 78: Filter
- 80: zweite Steuerleitung
- 82: Zwischenverbindung
- 84: erste Antriebseinheit
- 86: zweite Antriebseinheit
- 88: erster Druckkolben
- 90: erstes Verbindungselement
- 92: erstes Befestigungselement
- 94: zweiter Druckkolben
- 96: zweites Verbindungselement
- 98: zweites Befestigungselement
- 100: dritte Druckleitung
- 102, 104: Antriebsventile für erste Antriebseinheit 84
- 106,108: Rückschlag-Reduzierventile für erste Antriebseinheit 84
- 114: vierte Druckleitung
- 112, 114: Antriebsventile für zweite Antriebseinheit 86
- 116, 118: Rückschlag-Reduzierventile für zweite Antriebseinheit 86
- 120: Feder
- 122: Flüssigkeitsüberschuss
- 124: Flüssigkeitsvolumen in Pipettierbehälter 12
- 126: Pipettiereinheit
- 128: Führungsschiene
- 130: Mitnehmerbolzen
- 132: Rückschlagventil
- 134: Bypass
- 136: Reduzierventil
- 138: Vorratsbehälter für erste Pipettierflüssigkeit
- 140: Vorratsbehälter für zweite Pipettierflüssigkeit
- 142: Verbindungsleitung für erste Pipettierflüssigkeit
- 144: Verbindungsleitung für zweite Pipettierflüssigkeit
- 146: erstes Zuführventil
- 148: zweites Zuführventil
- 150: drittes Zuführventil

## Patentansprüche

1. Koaxialnadel (10) für eine Pipettiervorrichtung mit:
einer hohlen Sauglanze (14) zum Ansaugen einer Flüssigkeit aus einem Pipettierbehälter (12); und
einer hohlen Einführlanze (16), welche die Sauglanze (14) zumindest teilweise umschließt, so dass zwischen einer Außenwand der Sauglanze (14) und einer Innenwand der Einführlanze (16) ein Flüssigkeitskanal (28) zum Einbringen einer Flüssigkeit in einen Pipettierbehälter (12) ausgebildet ist.

2. Koaxialnadel (10) nach Anspruch 1 , wobei die Sauglanze (14) ein erstes offenes Ende (18) zur Aufnahme einer Flüssigkeit aus einem Pipettierbehälter (12) und ein dem ersten offenen Ende (18) axial gegenüberliegendes zweites offenes Ende (20) zur Abgabe der aufgenommenen Flüssigkeit an einen Absaugstutzen (36) aufweist und wobei die Einführlanze (16) ein erstes offenes Ende (22) zur Abgabe einer Flüssigkeit in einen Pipettierbehälter (12) und ein dem ersten offenen Ende (22) axial gegenüberliegendes zweites offenes Ende (24) zur Aufnahme einer Flüssigkeit aus einem Einführstutzen (34) aufweist.

3. Koaxialnadel (10) nach Anspruch 1 oder 2, wobei die Sauglanze (14) und die Einführlanze (16) entlang einer gemeinsamen Axialrichtung (26) verfahrbar sind.

4. Koaxialnadel (10) nach Anspruch 3, wobei die Sauglanze (14) und die Einführlanze (16) entlang der Axialrichtung (26) unabhängig voneinander verfahrbar sind.

5. Pipettiervorrichtung mit einer Koaxialnadel (10) nach einem der Ansprüche 2 bis 4, wobei das zweite offene Ende (24) der Einführlanze (16) über eine erste Verbindungsleitung (38) mit einem ersten Vorratsbehälter (42) verbunden ist und das zweite offene Ende (20) der Sauglanze (14) über eine zweite Verbindungsleitung (60) mit einem zweiten Vorratsbehälter (62) verbunden ist.

6. Pipettiervorrichtung nach Anspruch 5, wobei die Einführlanze (16) mit einer ersten Antriebseinheit (84) verbunden ist und die Sauglanze (14) mit einer zweiten Antriebseinheit (86) verbunden ist.

7. Pipettiervorrichtung nach Anspruch 6, wobei die erste Antriebseinheit (84) und/oder die zweite Antriebseinheit (86) pneumatische Antriebseinheiten sind.

8. Pipettiervorrichtung nach Anspruch 7, wobei die erste Antriebseinheit (84) einen ersten Druckkolben (88) sowie ein erstes Verbindungselement (90) und ein erstes Befestigungselement (92) umfasst und wobei das erste Befestigungselement (92) mit der Einführlanze (16) und über das erste Verbindungselement (90) mit dem ersten Druckkolben (88) verbindbar ist und wobei ferner die zweite Antriebseinheit (86) einen zweiten Druckkolben (94) sowie ein zweites Verbindungselement (96) und ein zweites Befestigungselement (98) umfasst und wobei das zweite Befestigungselement (98) mit der Sauglanze (14) verbunden und über das zweite Verbindungselement (96) mit dem zweiten Druckkolben (94) verbindbar ist.

9. Pipettiervorrichtung nach Anspruch 8, wobei das erste Befestigungselement (92) mit dem zweiten Befestigungselement (98) über eine Feder (120) verbunden und über einen Mitnehmerbolzen (130) verbindbar ist.

10. Pipettiervorrichtung nach einem der Ansprüche 6 bis 9 mit einer in einer Richtung senkrecht zu einer Axialrichtung (26) der Koaxialnadel (10) verfahrbaren Pipettiereinheit (126), welche die Koaxialnadel (10) zusammen mit der ersten Antriebseinheit (84) und der zweiten Antriebseinheit (86) umfasst, wobei eine Bauhöhe der Pipettiereinheit (126) entlang der Axialrichtung (26) 4 cm nicht überschreitet.

11. Pipettiervorrichtung mit:
einer Pipette zum Einbringen einer Flüssigkeit in einen Pipettierbehälter (12); und
einer Antriebseinheit (84) zum Verfahren der Pipette;
wobei die Antriebseinheit (84) eine pneumatische Antriebseinheit ist und über eine dritte Druckleitung (100) mit einer ersten Druckquelle (48) verbunden ist.

12. Mikroskop mit einer Pipettiervorrichtung nach einem der Ansprüche 5 bis 11.

13. Verfahren zur Pipettierung mit folgenden Schritten:
Positionieren einer Koaxialnadel (10) mit einer hohlen Sauglanze (14) und einer hohlen Einführlanze (16), welche die Sauglanze (14) zumindest teilweise umschließt, oberhalb eines Pipettierbehälters (12);
gemeinsames Verfahren der Sauglanze (14) und der Einführlanze (16) in den Pipettierbehälter (12);
Einbringen einer Flüssigkeit aus einem ersten Flüssigkeitsreservoir (42) in einen zwischen einer Außenwand der Sauglanze (14) und einer Innenwand der Einführlanze (16) ausgebildeten Flüssigkeitskanal (28); und
Einbringen der Flüssigkeit aus dem Flüssigkeitskanal (28) in den Pipettierbehälter (12).

14. Verfahren nach Anspruch 13 mit zusätzlich folgenden Schritten:
Verbinden eines zweiten offenen Endes (20) der Sauglanze (14) mit einer ersten Unterdruckquelle (66,66'); und
Absaugen eines Flüssigkeitsüberschusses (122) aus dem Flüssigkeitskanal (28) durch das Innere der Sauglanze (14) in ein zweites Flüssigkeitsreservoir (62).

15. Verfahren nach Anspruch 13 oder 14 mit zusätzlich folgenden Schritten:
Verfahren der Sauglanze (14) entlang einer gemeinsamen Axialrichtung (26) der Sauglanze (14) und der Einführlanze (16), bis ein erstes offenes Ende (18) der Sauglanze (14) in ein Flüssigkeitsvolumen (124) innerhalb des Pipettierbehälters (12) eintaucht; Verbinden eines zweiten offenen Endes (20) der Sauglanze (14) mit einer zweiten Unterdruckquelle; und
Absaugen zumindest eines Teils des Flüssigkeitsvolumens (124) aus dem Pipettierbehälter (12) durch das Innere der Sauglanze (14) in ein drittes Flüssigkeitsreservoir.
